# EUROPÄISCHE PATENTSCHRIFT

(11) **EP 1 886 572 B1**
(45) Veröffentlichungstag und Bekanntmachung des Hinweises auf die Patenterteilung: **27.07.2011**
(21) Anmeldenummer: 06016723.6
(22) Anmeldetag: 10.08.2006
(51) Int. Cl.: A22C 11/02

(54) **Während der Produktion einstellbare Wursthüllenbremse**
Sausage casing brake element being adjustable during production
Organe de freinage pour boyau de saucisse réglable pendant la production

(43) Veröffentlichungstag der Anmeldung: 13.02.2008
(73) Patentinhaber: Albert Handtmann Maschinenfabrik GmbH & Co. KG, 88400 Biberach (DE)
(72) Erfinder: Maile, Bernd, 88422 Oggelshausen (DE); Kibler, Armin, 88436 Eberhardzell (DE)
(74) Vertreter: Grünecker, Kinkeldey, Stockmair & Schwanhäusser Anwaltssozietät

(56) Entgegenhaltungen:
- EP-A1- 0 171 849
- CH-A5- 682 440
- DE-A1- 2 018 454
- DE-A1- 2 236 081
- DE-U1- 8 705 899
- DE-U1-202005 006 495
- US-A- 3 751 764
- US-A- 5 197 914

## Beschreibung

Die Erfindung betrifft eine Wursthüllenbremse sowie ein Verfahren zum Einstellen der Bremskraft einer Wursthüllenbremse.

Bei der maschinellen Wurstproduktion wird zunächst die Wursthülle auf das Füllrohr am Maschinenauslauf aufgebracht. Dann wird die Wursthüllenbremse am Füllrohrende positioniert.

Wursthüllenbremsen werden eingesetzt, um die Wursthülle beim Füllen mit Masse (z.B. Wurstbrät) an der Füllstelle, d.h. am Füllrohrende unter Spannung zu halten. Dies ist Voraussetzung für die Produktion qualitativ hochwertiger, praller Würste. Lässt sich die Wursthülle dagegen während dem Füllvorgang zu leicht vom Füllrohr abziehen, so erhält man einen schlechten Befüllungsgrad.

Daneben bewirkt die Wursthüllenbremse ein Mitdrehen der noch ungefüllten Wursthülle auf dem Füllrohr während dem Abdrehvorgang. Der bereits gefüllte Teil der Wurst dagegen dreht sich währenddessen massenträgheitsbedingt nicht mit bzw. wird festgehalten. Durch diese Relativbewegung wird eine Abdrehstelle am Ort der Wursthüllenbremse erzeugt, d.h. die Wurst portionsgerecht geformt.

Eine solche Wursthüllenbremse mit einem Bremsgummi, der von außen die Wursthülle auf das Füllrohr drückt ist bereits aus der EP 0 247 462 bekannt und ist beispielsweise in Fig. 5 dargestellt. Der Bremsgummi 1 ist Bestandteil der Wursthüllenbremse. Die Dichtlippe des Bremsgummis ist nach innen zum Füllrohr gerichtet. Der konische Bremsgummi wird zwischen zwei Schalen 2 und 3 axial verspannt. Dies erfolgt üblicherweise über ein Gewinde zwischen den Schalen. Durch Verspannen des Bremsgummis über eine Schräge kann der Durchmesser der Dichtlippe verändert und somit die Bremskraft eingestellt werden. Aufgrund der hohen Dynamik der Teile ist ein massenträgheitsbedingtes Verstellen der Bremsvorspannung während der Produktion unbedingt zu vermeiden. Deshalb wird die Einstellung in der Regel schwergängig ausgeführt, so dass ein Verstellen sehr schwer möglich ist. Das Einstellen der Bremswirkung während der Produktion ist daher insbesondere bei der angetriebenen Variante nicht möglich, sondern erfolgt während des Maschinenstillstands. Dies führt zu einer Produktionsunterbrechung. Somit kann die Bremskraft nicht ideal angepasst werden. Die eingestellte Bremskraft muss während des Betriebs überprüft werden und dann gegebenenfalls iterativ nachgestellt werden, wobei wieder ein Maschinenstillstand erforderlich ist. Je nach Ausführung behält das System beim Ausbau der Bremse aus dem Bremsgetriebe die zuletzt eingestellte Bremsvorspannung bei, ein Zerlegen der Bremse z.B. zur Reinigung der Einzelteile, führt jedoch zum Verlust dieser zuletzt eingestellten Bremsvorspannung. Nach dem Zusammenbau wird die letzte Einstellung nicht wieder hergestellt, sondern muss wieder während der Produktion durch Nachstellen in Produktionsunterbrechungen gefunden werden.

Aus der CH-682 440 ist eine Wursthüllenbremse bekannt, bei welcher die Bremskrafteinstellung durch verschieben der gesamten Vorrichtung auf einem konisch zulaufenden Füllrohr erfolgt.

Es sind bereits auch Wursthüllenbremsen mit einem Bremsgummi bekannt, der auf dem Füllrohr angeordnet ist und nach außen auf die Wursthülle drückt. Der Bremsgummi ist hier Bestandteil des Füllrohrs und fest mit diesem verbunden. Die Dichtlippe des Bremsgummis ist nach außen gerichtet, wobei eine konisch ausgeführte Hülse den Bremsgummi verspannt. Auch diese Lösung ist insofern von Nachteil, da immer nur die jeweils vorhergehende Bremseinstellung erhalten wird. Sobald z.B. ein Kaliberwechsel erfolgt geht die Einstellung des vorherigen Kalibers verloren. Die Bremse muss somit bei jedem Kaliberwechsel neu eingestellt werden. Die Bremsvorspannung ist nur schwer reproduzierbar. Die außenliegende Lippe des Bremsgummis auf dem Füllrohr kann leicht beschädigt werden. Darüber hinaus erschwert die Dichtlippe das Aufziehen der Wursthülle.

Hiervon ausgehend liegt der vorliegenden Erfindung die Aufgabe zugrunde eine Wursthüllenbremse und ein Verfahren zum Einstellen der Bremskraft bereitzustellen, die ein exaktes, reproduzierbares und einfaches Einstellen der Bremskraft ermöglichen.

Erfindungsgemäß wird diese Aufgabe durch die Merkmale der Ansprüche 1 und 20 gelöst.

Gemäß der vorliegenden Erfindung kann die Verspannung bzw. die Bremskraft der Wursthüllenbremse während der Produktion, vorzugsweise in Verbindung mit einer angetriebenen Wursthüllenbremse, auf einfache Art und Weise eingestellt werden. Während der Produktion bedeutet hier, dass die Füllmaschine nicht im Stillstand ist, sondern der Füllvorgang läuft, d.h. dass pastöse Masse in eine Wursthülle geschoben wird. Dies ermöglicht eine sehr exakte Einstellung der Wursthüllenbremse. Die Füllvorrichtung muss dazu weder gestoppt werden noch muss die Wursthüllenbremse abgebaut werden.

Es ist sogar möglich die Bremskraft einzustellen, wenn das Verspannmittel zusammen mit dem Füllrohr um die Längsachse des Füllrohrs angetrieben wird.

Dadurch, dass gemäß der vorliegenden Erfindung zusätzlich zu den Verspannmitteln noch eine Einstelleinrichtung vorgesehen ist, die auf das Verspannmittel einwirkt und die die Verspannung des Bremsrings hält kann von außen der Bremsring verstellt werden ohne dass die Produktion gestoppt werden muss oder die Bremse zerlegt werden muss. Da die Einstelleinrichtung in dem Zustand, der einer bestimmten Bremskraft entspricht, gehalten werden kann, kann zur Reinigung das Verspannmittel zerlegt werden, wobei beim wieder Zusammensetzen der Teile die Bremsvorspannung erhalten bleibt. Dadurch, dass die Bremskraft während der Produktion eingestellt werden kann, kann die Höhe der Bremskraft exakt festgelegt werden. Auch während des Betriebs ist beispielsweise beim Nachlassen der Bremskraft ein einfaches Nachstellen möglich.

Während der Produktion kann das Verspannmittel zumindest zeitweise zum Abdrehen der gefüllten Wursthülle um die Längsachse des Füllrohrs gedreht werden wobei die Einstelleinrichtung nicht angetrieben wird und sich nicht dreht.

Auch beim Ausbau und der Reinigung der Wursthüllenbremse können unterschiedliche Einstellungen für unterschiedliche Kaliber erhalten bleiben, so dass es möglich ist, unterschiedliche Bremsen mit voreingestellter Bremskraft für unterschiedliche Kaliber zu verwenden.

Gemäß einer bevorzugten Ausführungsform umfasst das Verspannmittel eine erste und eine zweite Schale, zwischen welchen der Bremsring angeordnet ist, wobei zumindest die erste Schale in Axialrichtung frei zur anderen Schale verschiebbar ist, wobei die Einstelleinrichtung mindestens eine Schale verschiebt. Frei verschiebbar bedeutet hier in Gegensatz zum Stand der Technik, dass die Schalen nicht mittels Gewinde zueinander bzw. voneinander wegbewegt werden, sondern durch eine Kraft, die in Axialrichtung wirkt (oder zumindest eine Axialkomponente umfasst) zueinander verschoben werden können. Durch diese einfache Verschiebbarkeit kann leicht von außen auf mindestens eine der Schalen gedrückt werden, wodurch sich die axiale Verspannung des Bremsgummis ändert. Eine solche Bewegung kann auch während der Produktion auf einfache Art und Weise durchgeführt werden.

Dabei kann die Bremsvorrichtung weiter mindestens ein Lager umfassen, so dass die erste und zweite Schale drehbar um die Längsachse des Füllrohrs gelagert sind und auch angetrieben werden können.

Die Einstelleinrichtung kann insbesondere eine Halteeinrichtung, beispielsweise einen Haltestern umfassen, die dem freien Ende des Füllrohrs gegenüberliegend angeordnet ist, zum Festhalten der gefüllten Wursthülle gegen Verdrehen, wobei zumindest ein Teil der Halteeinrichtung im Wesentlichen axial verstellbar ist und gegen die erste Schale drückt. Somit kann auf einfache Art und Weise die in der Wursthüllenbremse vorgesehene Halteeinrichtung verwendet werden um auf die sich axial verstellbare Schale zu drücken.

In vorteilhafter Weise ist zwischen Halteeinrichtung und Schale ein Gleitring angeordnet, der die Kraft auf die erste Schale überträgt. Dieser drückt dann beim Einstellen der Bremskraft die Halteeinrichtung mehr oder weniger stark auf die Schale. Die Verwendung des Gleitrings ist besonders verschleißarm, da dieser auf einfache Art und Weise kostengünstig ausgetauscht werden kann, wobei weder Schale noch Halteeinrichtung in Betrieb der Wursthüllenbremse abgenutzt werden.

Es ist vorteilhaft, wenn die beiden Schalen als vormontierte Baueinheit derart ausgebildet sind, dass sie sich axial gegeneinander verschieben lassen und weiter eine Schalenverbindung aufweisen, die derart ausgebildet ist, dass die Schalen nicht auseinanderfallen. Eine solche Schalenverbindung kann beispielsweise ein Schnappverschluss, Bajonett oder ähnliche Verbindung sein. Eine solche Ausführung ermöglicht eine schnelle Montage, Demontage und Reinigung aller Teile. Dabei können die erste und zweite Schale über die Schalenverbindung miteinander verbunden sein, wobei die zweite Schale an einer Aufnahme befestigt ist, die wiederum über mindestens ein Lager drehbar um die Längsachse des Füllrohrs gelagert ist.

Gemäß einer weiteren Ausführungsform umfasst die Einstelleinrichtung einen Magneten, wobei die erste Schale zumindest teilweise magnetisch ausgebildet ist, derart, dass die Schale über die magnetische Kraft axial verschiebbar ist. Ein wesentlicher Vorteil dieser Alternative besteht in der berührungslosen und somit verschleißfreien axialen Kraftübertragung zwischen Einstelleinrichtung und Schale, d.h. z. B. zwischen rotierendem und stehendem Magneten.

Der Magnet der Einstelleinrichtung kann dabei axial verschiebbar sein, wobei sich durch Verschieben der Abstand der Magnete zueinander verändert, so dass die Schale in unterschiedlichem Maß verschoben werden kann. Der Magnet der Einstelleinrichtung kann dabei Teil der Halteeinrichtung bzw. des Haltesterns sein. Zur Einstellung der Magnetkraft, kann der Magnet beispielsweise derart ausgebildet sein, z.B. als Elektromagnet, dass sich seine Magnetkraft und damit die Kraft, die auf die verschiebbare Schale wirkt, über entsprechende Mittel verändern lässt.

Gemäß einer weiteren Ausführungsform umfasst die Einstelleinrichtung einen abgedichteten Raum, in dem ein Fluid eingeschlossen ist, und der zwei Abschnitte umfasst, von denen einer bei Änderung des Drucks in dem abgeschlossenen Raum in Axialrichtung beweglich ist und eine Axialkraft auf die erste Schale überträgt, wobei die Wursthüllenbremse weiter Mittel zum Ändern des Drucks in dem Raum umfasst. Auch hier ergibt sich der Vorteil, dass z. B. sich die Übertragung der Axialkraft vom stehenden Teil auf das sich drehende Teil nahezu reibungsfrei und damit verschleißfrei realisieren lässt. Vorteilhafterweise ist der Abschnitt, der sich in Axialrichtung bewegt, einstückig mit der ersten Schale ausgebildet. Der Druck in dem Raum kann durch Ändern des Volumens oder durch Ändern der Füllmenge des Mediums durch eine entsprechende Leitung verändert werden.

Gemäß einer weiteren Ausführungsform der vorliegenden Erfindung umfasst das Verspannmittel eine Schale, die den Bremsring abstützt sowie einen Magneten, der den Bremsring durch seine Magnetkraft ebenfalls abstützt, wobei der Bremsring zumindest teilweise magnetisch ausgebildet ist, derart, dass der Bremsring über die Magnetkraft axial und/oder radial verspannbar ist.

Auch diese Ausführungsform ist extrem einfach und verschleißarm. Auch hier kann die Einstelleinrichtung derart ausgebildet sein, dass der Magnet axial beweglich angeordnet ist, oder aber Mittel zum Ändern der Magnetkraft des Magneten der dem Bremsring gegenüberliegt vorgesehen sind.

Gemäß der vorliegenden Erfindung können auch beide Schalen in entsprechenden Lagern separat gelagert sein wobei sich zumindest eines der Lager axial verschieben lässt. Die Bremswirkung kann durch axiales Verschieben der Lager gegeneinander, vorzugsweise durch Drücken auf den beweglichen Lagerring eingestellt werden.

Die Einstelleinrichtung kann derart ausgebildet sein, dass die erste Schale durch Druckluft oder mittels Wasserstrahl in Axialrichtung bewegbar ist.

Die vorliegende Erfindung wird nachfolgend unter Bezugnahme der folgenden Figuren näher erläutert werden.
- Fig. 1: zeigt einen Längsschnitt durch ein erstes Ausführungsbeispiel gemäß der vorliegenden Erfindung;
- Fig. 2: zeigt einen Längsschnitt durch ein zweites Ausführungsbeispiel gemäß der vorliegenden Erfindung;
- Fig. 3: zeigt einen Längsschnitt durch ein drittes Ausführungsbeispiel gemäß der vorliegenden Erfindung;
- Fig. 4: zeigt einen Längsschnitt durch ein viertes Ausführungsbeispiel gemäß der vorliegenden Erfindung;

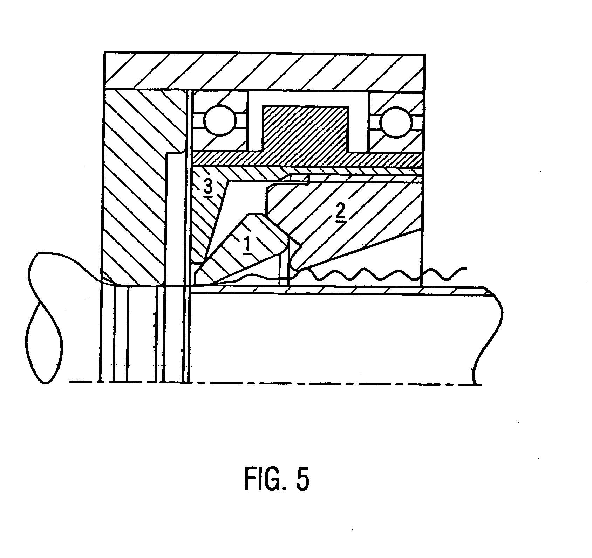

- Fig. 5: zeigt einen Schnitt durch eine Darmbremse gemäß dem Stand der Technik.

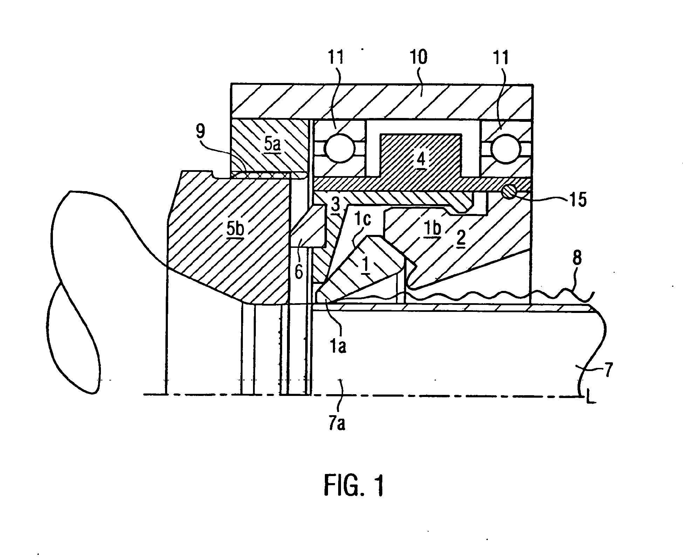

Fig. 1 zeigt eine erste Ausführungsform gemäß der vorliegenden Erfindung. Mit 7 ist ein Füllrohr bezeichnet, über das in bekannter Weise pastöse Masse in eine Wursthülle 8 gefördert werden soll, die über das Füllrohr 7 gezogen ist. Das Füllrohr wird über einen nicht dargestellten Trichter und eine nicht dargestellte Portioniervorrichtung portionsweise mit pastöser Masse beschickt, wie allgemein bekannt ist und hier nicht näher erläutert wird.

Bei der maschinellen Wurstproduktion wird zunächst die Wursthülle 8 auf das Füllrohr 7 an seinem freien Ende 7a aufgebracht. Dann wird in bekannter Weise die Wursthüllenbremse am Füllrohrende 7a positioniert.

Das Füllrohr 7 kann je nach Ausführungsform drehbar gelagert und gegebenenfalls über einen nicht dargestellten Antrieb um die Mittelachse L angetrieben werden. Die Wursthüllenbremse umfasst ein feststehendes Gehäuse 10, sowie einen Bremsring 1, der aus elastischem Material insbesondere als Bremsgummi ausgebildet ist. Der Bremsring 1 ist konzentrisch zum Füllrohr 7 angeordnet.

Die Wursthüllenbremse umfasst ein Verspannmittel 2, 3 zum axialen und/oder radialen Verspannen des Bremsrings 1. Hier bedeutet Axial- bzw. Radialrichtung eine Richtung mit zumindest einer Axial- oder Radialkomponente. Hier umfasst das Verspannmittel die Schalen 3 und 2, die ebenfalls konzentrisch zum Füllrohr 7 angeordnet sind. Zwischen den Schalen 2, 3 ist der Bremsring 1 eingelegt. Der Bremsring weist einen im Wesentlichen konischen Schnitt auf und drückt mit seiner Dichtlippe 1 a die Wursthülle 8 auf das Füllrohr 7. Der Bremsring ist mit seiner Dichtlippe 1 a schräg nach innen zum Füllrohr 7 gerichtet. Der Bremsring 1 weist an seinem breiteren Ende eine schräge Endfläche 1 b auf, die auf einer schrägen Fläche der Schale 2 zu liegen kommt. Die Schale 3 drückt auf die obere Fläche 1 c des konischen Bremsrings 1. Durch Verspannen des Bremsrings 1 zwischen den Schalen 3 und 2 kann der Bremsdruck und somit der Durchmesser der Dichtlippe 1 a verändert und eingestellt werden.

Die Schalen 3 und 2 sind derart miteinander verbunden, dass sie sich axial gegeneinander verschieben lassen. Es ist ausreichend, wenn eine Schale frei zur anderen Schale verschiebbar ist. Hier ist die Schale 3 in Axialrichtung zur Schale 2 hin und her verschiebbar. Die Schalen 2, 3 sind jedoch so ausgebildet, dass sie nicht auseinanderfallen können. Diese vorzugsweise über Schnappverschluss, Bajonett oder ähnliche realisierte Schalenverbindung ermöglicht eine schnelle Montage, Demontage oder Reinigung der Teile.

Die vormontierte Einheit aus den beiden Schalen 2, 3 und dem dazwischen eingelegten Bremsgummi 1 wird in die Wursthüllenbremse, bzw. das Bremsgetriebe eingesetzt. Dabei ist eine der Schalen 2 fest in der Aufnahme 4 fixiert, die andere Schale 3 axial verschiebbar gelagert. Die Aufnahme 4 ist über die Lager 11 drehbar in der Wursthüllenbremse gelagert. Das heißt, dass sich die Verspannmittel, hier die Schalen 2, 3 mit dem Bremsgummi 1 um die Achse L des Füllrohrs 7 zusammen mit dem Füllrohr drehen können. Dabei kann ein nicht näher beschriebener Antrieb vorgesehen sein, der allgemein bekannt ist und nicht näher erläutert werden muss. Es ist auch möglich, dass die Aufnahme 4 zusammen mit den Schalen 3, 2 und dem Bremsgummi 1 in den Lagern 11 nur drehbar gelagert sind und zusammen mit dem Füllrohr 7 angetrieben werden. Mit 15 ist ein Sicherungselement gekennzeichnet, mit dem die Schale 2 in der Aufnahme 4 fixiert ist. Dieses Sicherungselement kann beispielsweise als Federring, Spannring oder als Raste ausgebildet sein.

Die Vorrichtung umfasst auch weiter eine Einstelleinrichtung 5, die derart auf das Verspannmittel, hier die Schale 3 einwirkt, dass die axiale Vorspannung des Bremsrings 1 auf einfache Art und Weise verstellbar ist und gehalten wird. Hier umfasst die Einstelleinrichtung 5 eine Halteeinrichtung, beispielsweise den Haltestern 5, der nicht angetrieben wird, sondern auch, wenn ein Abdrehvorgang vorgenommen wird, fest mit dem Gehäuse 10 verbunden ist. Die Halteeinrichtung ist so ausgebildet, dass die gefüllte Wurst hindurchgeführt wird und gegen Verdrehen gehalten wird. Hier ist der Haltestern 5 zweiteilig ausgeführt. Der innere Teil 5b des Haltesterns 5 kann beispielsweise über das Gewinde 9 axial verstellt werden. Der äußere Teil 5a ist fest mit dem Gehäuse 10 verbunden.

Zwischen der Schale 3, die beispielsweise rotiert und dem feststehenden Haltestern 5 befindet sich ein Gleitring 6. Dieser drückt beim Einstellen des Haltesterns 5 mehr oder weniger stark auf die Schale 3. Über die axial verschiebbare Schale 3 wird der Bremsgummi deformiert und somit die Vorspannung der Bremse eingestellt. Der Gleitring 6 besteht vorzugsweise aus Kunststoff. Durch die Verwendung des Gleitrings 6 zwischen der Halteeinrichtung 5 und der Schale 3 wird der Verschleiß der Schale 3 und der Halteeinrichtung 5 verringert. Der Kunststoffgleitring 6 kann bei Verschleiß kostengünstig und einfach ausgetauscht werden.

Über den inneren Teil 5b des Haltesterns kann somit in einfacher Art und Weise auch während der Produktion, d.h. wenn Füllgut in die Wursthülle ausgestoßen wird, die Bremsspannung eingestellt und gehalten werden. Selbst wenn die Wursthüllenbremse angetrieben ist, d.h. wenn sich die Schale 3, 2 und der Bremsring 1 um die Achse L drehen, kann dennoch auf einfache Art und Weise durch die Axialkraft, die auf die Schale 3 übertragen wird, die Bremskraft eingestellt werden. Die Kraft, die von der Einstelleinrichtung ausgeht und auf die Schale 3 wirkt, bleibt dann während der Produktion erhalten.

Auch bei nicht angetriebener Bremse ist eine einfache Einstellung der Bremskraft während der Produktion möglich. Wenn zu Reinigungszwecken die Darmbremse abgebaut wird und beispielsweise die Schalen 2 und 3 bzw. die Baueinheit mit den Schalen 2 und 3 ausgebaut wird, kann, wenn die Bremse wieder zusammengebaut wird, der korrekte Bremsdruck aufrechterhalten werden, da der Zustand der Einstelleinrichtung, d.h. hier die axiale Position des inneren Teils des Haltesterns 5b aufrechterhalten wird. Dieser Ausbau ermöglicht eine einfache Demontierbarkeit, und somit eine verbesserte Hygienesituation in Folge der einfachen Reinigungsmöglichkeiten.

Das in Fig. 1 gezeigte Ausführungsbeispiel , sowie die nachfolgend gezeigten Ausführungsbeispiele sind im Zusammenhang mit einer angetriebenen Wursthüllenbremse gezeigt. Alternativ ist das erfindungsgemäße Konzept auch in Verbindung mit nicht angetriebener Bremse möglich.

Alternativ kann die in Fig. 1 gezeigte Konstruktion auch derart ausgeführt sein, dass die beiden Schalen 2, 3 jeweils separat in einem entsprechenden Lager gelagert sind und sich eines dieser Lager (z.B. Kugellager) axial verschieben lässt. Da jedes Lager einen stehenden und einen rotierenden Lagerring aufweist, kann die Bremswirkung durch axiales Verschieben der Lager gegeneinander, vorzugsweise durch Drücken auf den stehenden Lagerring des axial verschiebbaren Lagers, eingestellt werden. Über den Lagerring wird dann die Axialkraft auf die Schale 3 übertragen.

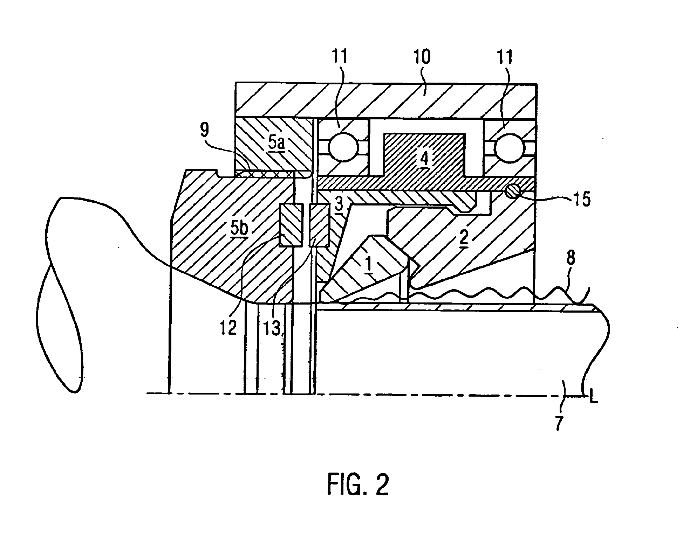

Fig. 2 zeigt ein zweites Ausführungsbeispiel der vorliegenden Erfindung, das im Wesentlichen dem in Fig. 1 gezeigten Ausführungsbeispiel entspricht, wobei jedoch die Einstelleinrichtung einen ringförmigen Magneten 12 umfasst, dessen Magnetkraft in Axialrichtung auf die Schale 3 wirkt. Dabei ist auch die Schale 3 zumindest teilweise magnetisch ausgebildet, wobei hier der ebenfalls ringförmige Magnet 13 in die Schale 3- dem Magneten 12 gegenüberliegend - eingearbeitet ist. Hier ist der Magnet 12 in die Halteeinrichtung 5 eingearbeitet. Bei dieser Ausführungsform ist wieder der innere Teil 5b der Halteeinrichtung bzw. des Haltesterns 5 über das Gewinde 9 im feststehenden Haltestern axial verstellbar. Durch Änderung der axialen Position des Magneten 12 ändert sich die Axialkraft, die auf die Schale 3 wirkt, so dass die Schale 3 in Axialrichtung verschoben werden kann, um die axiale Verspannung des Bremsrings 1 zu verändern. Statt den Magneten 12 axial verschiebbar anzuordnen, ist es auch möglich, Mittel vorzusehen, die die Magnetkraft des Magneten 12 verändern. Beispielsweise ist der ringförmig angeordnete Magnet 12 ein Elektromagnet, dessen Stärke in einem Bereich zur Einstellung der Axialkraft frei wählbar ist. Auch bei diesem Ausführungsbeispiel wird die Bremskraft durch die Einstelleinrichtung, hier durch die Magnetkraft des Magneten 12, während der Produktion eingestellt, um eine exakt eingestellte Bremskraft zu erhalten. Ein wesentlicher Vorteil dieser Alternative besteht in der berührungslosen und somit verschleißfreien axialen Kraftübertragung zwischen der feststehenden Einstelleinrichtung und der gegebenenfalls rotierenden Schale 3, d.h. zwischen dem rotierenden 12 und stehenden Magneten13. Die festgelegte Magnetkraft wird dann zur Produktion aufrechterhalten. Die Magnetkraft ist durch die axiale Position des Magneten, wie zuvor beschrieben, festgelegt und bleibt so auch beim Ausbau der Schalen in unverändertem Zustand. Sollte als Magnet ein in seiner Stärke einstellbarer Elektromagnet verwendet werden, so kann der Zustand der Einstelleinrichtung auch beim Ausbau der Schalen und erneuter Montage der Bremse aufrechterhalten werden, indem die entsprechende Magnetstärke wieder eingestellt wird.

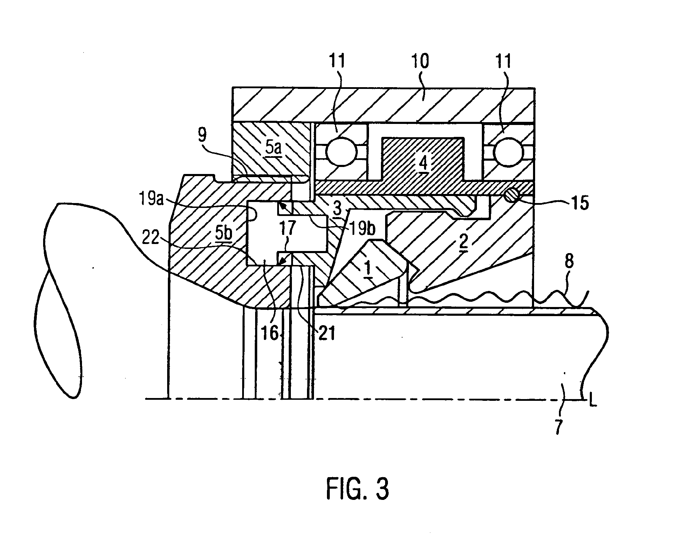

Fig. 3 zeigt eine weitere Ausführungsform gemäß der vorliegenden Erfindung, die wieder im Wesentlichen dem ersten und zweiten Ausführungsbeispiel entspricht. Im Gegensatz zu den in den Fig. 1 und 2 gezeigten Ausführungsbeispiel umfasst hier die Einstelleinrichtung einen abgedichteten Raum 16, der mit einem Fluid gefüllt ist. Der abgedichtete Raum 16 umfasst zwei Abschnitte 19a, b, von denen einer 19b sich bei Änderung des Drucks in dem abgedichteten Raum 16 in Axialrichtung bewegt. Hier ist ein Abschnitt 19a des abgedichteten Raums 16 in der Halteeinrichtung 5 bzw. dem Haltestern 5 ausgebildet, während der andere Abschnitt in Verbindung mit der Schale 3 steht und hier einstückig mit der ersten Schale 3 ausgebildet ist. Der abgeschlossene Raum 16 ist konzentrisch zum Füllrohr 7 angeordnet. Die beiden Gleitringdichtungen 17 sind an der Verlängerung der beweglichen Schale 3, d.h. dem Abschnitt 19b angeordnet. Die Außenflächen 21 des Abschnitts 19b und der Gleitringdichtungen 17 sind so angeordnet, dass sie entlang der Innenfläche 22 des Raums 16 gleiten können.

Bei Veränderung des Drucks in dem Raum 16, beispielsweise durch Veränderung der Füllmenge des Mediums über eine nicht gezeigte Leitung verschiebt sich der Abschnitt 19b in Axialrichtung und mit ihm zusammen die Schale 3, wodurch sich die axiale Verspannung des Bremsrings 1 ändert. Der Abschnitt 19a bleibt in unveränderter Position.

Der Druck in dem Raum 16 kann auch durch Verkleinerung des Volumens des Raums 16 erzielt werden, indem ein Teil, hier der innere Teil 5b der Halteeinrichtung 5 beispielsweise über das Gewinde 9 in Axialrichtung verdreht wird. Durch Ansteigen des Drucks gleitet dann der Abschnitt 19b in Axialrichtung, wodurch die Schale 3 auf den Bremsring 1 drückt.

Die Gleitringdichtung 17 ist vorzugsweise aus Kunststoff gefertigt.

Die Übertragung der Axialkraft von dem stehenden Teil, hier Halteteil 5 bzw. Abschnitt 19a des Raums 16 auf das sich z.B. drehende Teil, hier Abschnitt 19b zusammen mit Schale 3, erfolgt nahezu reibungsfrei über die Gleitringdichtung 17 und damit nahezu verschleißfrei.

Auch hier wird, wenn der korrekte Druck und somit die korrekte Bremsspannung eingestellt ist, der Druck während der Produktion aufrechterhalten. Auch nach Reinigung der Bremse kann dann die Einstellung der Bremskraft einfach reproduziert werden, indem der ermittelte Druck wieder eingestellt wird .

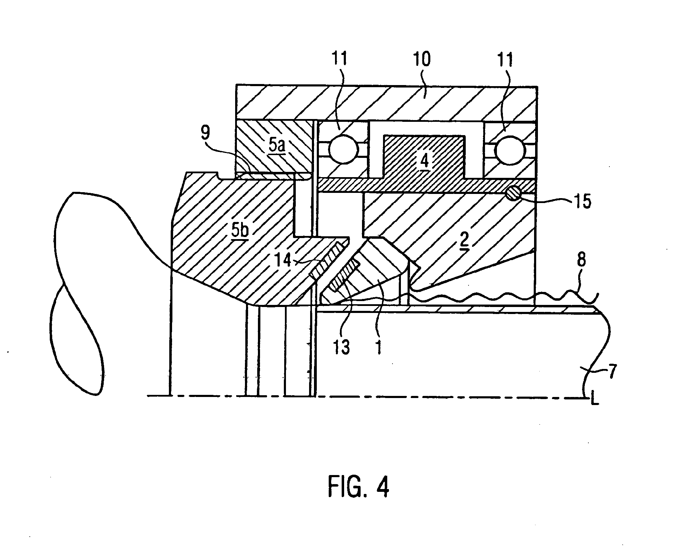

Fig. 4 zeigt eine weitere Ausführungsform gemäß der vorliegenden Erfindung. Das in Fig. 4 gezeigte Ausführungsbeispiel entspricht im Wesentlichen dem in Fig. 2 gezeigten Ausführungsbeispiel, wobei jedoch das Verspannmittel aus einer Schale 2 gebildet ist, die den Bremsring 1 axial stützt und einem Magneten 14, dessen Magnetkraft den Bremsring 1 ebenfalls axial abstützt, wobei der Bremsring 1 zumindest teilweise magnetisch ausgebildet ist. Hier ist der Magnet 13 ringförmig in die Oberfläche des Bremsrings 1 eingearbeitet. Die Schale 2 ist fest mit der Aufnahme 4, die in dem vorhergehenden Beispiel näher erläutert ist, über die Lager 11 drehbar gelagert, angeordnet. Bei dem in Fig. 4 gezeigten Ausführungsbeispiel liegt der Magnet 14, der Teil des Verspannmittels ist, dem Magneten 13 gegenüber. Der Magnet 14 ist hier in der Halteeinrichtung, hier dem Haltestern 5,eingearbeitet. Wie bei den vorherigen Ausführungsbeispielen ist der innere Teil 5b der Halteeinrichtung über das Gewinde 9 axial beweglich angeordnet. Über den Abstand der Magnete 14 und 13 ändert sich auch die Magnetkraft, die den Bremsring 1 axial und/oder radial verspannt. Hier ist der Magnet 13 schräg in die obere Fläche des konisch zulaufenden Bremsrings eingearbeitet. Der Magnet 14 ist entsprechend geneigt angeordnet.

Wie in Zusammenhang mit dem zweiten Ausführungsbeispiel erläutert kann auch hier selbst nach Ausbau und Reinigung durch Aufrechterhaltung der Magnetkraft die passende Bremskraft einfach reproduziert werden.

Anstatt den Magneten 14 axial beweglich zur Veränderung der Axialkraft anzuordnen ist es auch möglich, dass die Einstelleinrichtung Mittel zur Veränderung der Magnetkraft des Magneten 14 einschließt. Der Magnet 14 kann ein ringförmiger Elektromagnet sein.

Bei dem Verfahren gemäß der vorliegenden Erfindung wird die Wursthüllenbremse an einem freien Ende 7a eines Füllrohrs, auf dem die Wursthülle positioniert ist, platziert. Die Bremskraft der Wursthüllenbremse wird in eingebautem Zustand durch Betätigung der Einstelleinrichtung 5, 12, 16 während der Produktion durchgeführt, d. h. während die Wursthülle befüllt wird. Dabei übt die Einstelleinrichtung eine Axialkraft und/oder Radialkraft auf das Verspannmittel 2, 3 aus, so dass die axiale und/oder radiale Vorspannung des Bremsrings während der Produktion eingestellt und gehalten wird.

Dabei kann beispielsweise die Axialkraft von der stehenden Einstelleinrichtung, die sich nicht dreht, auf das sich drehende Verspannmittel übertragen werden. Die Einstelleinrichtung wird in dem Zustand, der einer bestimmten Bremskraft entspricht, gehalten.

Es ist möglich, dass beim Abbau der Wursthüllenbremse, unterschiedliche Einstellungen der Bremskraft z. B. für unterschiedliche Kaliber erhalten bleiben. Es können für unterschiedliche Kaliber unterschiedliche Bremsen mit voreingestellter Bremskraft verwendet werden.

## Patentansprüche

1. Wursthüllenbremse zum Halten von Wursthülle (8) an einem freien Ende (7a) eines Füllrohrs (7) über das die Wursthülle (8) mit pastöser Masse befüllt wird mit:
einem Bremsring (1), der um das Füllrohr (7) anzuordnen ist, und derart verspannbar ist, dass er die Wursthülle (8) auf das Füllrohr (7) drückt,
ein Verspannmittel (2, 3, 14) zum Verspannen des Bremsringes(1) eine Einstelleinrichtung (5, 12, 16), die zur Verspannung des Bremsrings während der Produktion eine veränderbare Kraft auf das Verspannmittel (2, 3, 14) ausübt und hält,
derart dass die Verspannung des Bremsrings (1) und somit die Bremskraft während der Produktion verstellbar ist,
**dadurch gekennzeichnet, dass**
die Einstelleinrichtung (5, 12, 16) eine nicht angetriebene Halteeinrichtung (5) umfasst,
durch die die gefüllte Wurst durchgeführt und gegen Verdrehen gehalten wird.

2. Wursthüllenbremse nach Anspruch 1,
**dadurch gekennzeichnet, dass**
das Verspannmittel (2, 3, 14) eine erste (3) und zweite (2) Schale umfasst, zwischen welchen der Bremsring (1) angeordnet ist, wobei zumindest die erste Schale (3) in Axialrichtung frei zur anderen Schale (2) verschiebbar ist, wobei die Einstelleinrichtung (5, 12), die mindestens eine Schale (3) verschiebt, so dass sich die axiale Verspannung des Bremsrings (1) verändert.

3. Wursthüllenbremse nach Anspruch 2,
**dadurch gekennzeichnet, dass**
die Wursthüllenbremse mindestens ein Lager (11) umfasst, so dass die erste und zweite Schale (2, 3) drehbar um die Längsachse (L) des Füllrohrs (7) gelagert und antreibbar sind.

4. Wursthüllenbremse nach mindestens einem der Ansprüche 2 oder 3,
**dadurch gekennzeichnet, dass**
zumindest ein Teil (5b) der Halteeinrichtung (5) die dem freien Ende (7a) des Füllrohres (7) gegenüberliegend angeordnet ist, im Wesentlichen axial verstellbar ist und gegen die erste Schale (3) drückt.

5. Wursthüllenbremse nach Anspruch 4,
**dadurch gekennzeichnet, dass**
zwischen Halteeinrichtung (5) und Schale (3) ein Gleitring (6) angeordnet ist, der die Kraft auf die erste Schale (3) überträgt.

6. Wursthüllenbremse nach mindestens einem der Ansprüche 2 bis 5,
**dadurch gekennzeichnet, dass**
die beiden Schalen (2, 3) als vormontierte Baueinheiten derart ausgebildet sind, dass sie sich axial gegeneinander verschieben lassen und eine Schalenverbindung aufweisen, die derart ausgebildet ist, dass die Schalen (2, 3) nicht auseinanderfallen.

7. Wursthüllenbremse nach mindestens einem der Ansprüche 2 bis 6,
**dadurch gekennzeichnet, dass**
die erste und zweite Schale (2, 3) über eine Schalenverbindung miteinander verbunden sind und die zweite Schale an einer Aufnahme (4) befestigt ist, die über mindestens ein Lager (11) drehbar um die Längsachse (L) des Füllrohrs gelagert ist.

8. Wursthüllenbremse nach mindestens einem der Ansprüche 2 bis 7,
**dadurch gekennzeichnet, dass**
die Einstelleinrichtung (5, 12, 16) einen Magneten (12) umfasst und die erste Schale (3) zumindest teilweise magnetisch ausgebildet ist, derart, dass die Schale (3) über die magnetische Kraft axial verschiebbar ist.

9. Wursthüllenbremse nach Anspruch 8,
**dadurch gekennzeichnet, dass**
der Magnet (12) axial verschiebbar ist.

10. Wursthüllenbremse nach Anspruch 9,
**dadurch gekennzeichnet, dass**
die Halteeinrichtung (5) den Magneten(5) umfasst.

11. Wursthüllenbremse nach Anspruch 8,
**dadurch gekennzeichnet, dass**
die Einstelleinrichtung (5, 12, 16) Mittel umfasst, so dass die magnetische Kraft verstellbar ist.

12. Wursthüllenbremse nach mindestens einem der Ansprüche 1 bis 7,
**dadurch gekennzeichnet, dass**
die Einstelleinrichtung (5, 12, 16) einen abgedichteten Raum (16) umfasst, in dem ein Fluid eingeschlossen ist, und der zwei Abschnitte (19a, b) umfasst, von denen einer (19b) bei Änderung des Drucks in dem abgedichteten Raum (16) in Axialrichtung beweglich ist und eine Axialkraft auf die erste Schale (3) überträgt, so wie ein Mittel zum Ändern des Drucks in dem Raum (16).

13. Wursthüllenbremse nach Anspruch 12,
**dadurch gekennzeichnet, dass**
der Abschnitt (19b), der sich in Axialrichtung bewegt, einstückig mit der ersten Schale (3) ausgebildet ist.

14. Wursthüllenbremse nach Anspruch 12 oder 13,
**dadurch gekennzeichnet, dass**
der Druck durch Ändern des Volumens des abgedichteten Raums (16) änderbar ist, oder durch Ändern der Füllmenge des Fluids durch eine entsprechende Leitung.

15. Wursthüllenbremse nach Anspruch 2,
**dadurch gekennzeichnet, dass**
die Einstelleinrichtung derart ausgebildet ist, dass die erste Schale (3) durch den Strahl eines Fluids in Axialrichtung bewegbar ist.

16. Wursthüllenbremse nach Anspruch 2,
**dadurch gekennzeichnet, dass**
beide Schalen in entsprechenden Lagern separat gelagert sind, wobei zumindest eines der Lager axial verschiebbar ist, und die Einstelleinrichtung das verschiebbare Lager zusammen mit der Schale axial verschiebt.

17. Wursthüllenbremse nach Anspruch 1,
**dadurch gekennzeichnet, dass**
das Verspannmittel eine Schale (2) umfasst, die den Bremsring (1) abstützt und einen Magneten (14), der den Bremsring (1) durch seine Magnetkraft abstützt, und der Bremsring (1) zumindest teilweise magnetisch ausgebildet ist, derart, dass der Bremsring (1) über die Magnetkraft des Magneten (14) verspannbar ist.

18. Wursthüllenbremse nach Anspruch 17,
**dadurch gekennzeichnet, dass**
die Einstelleinrichtung (5, 12, 16) derart ausgebildet ist, dass der Magnet (14) axial beweglich angeordnet ist.

19. Wursthüllenbremse nach Anspruch 17,
**dadurch gekennzeichnet, dass**
die Einstelleinrichtung (5, 12, 16) Mittel zum Ändern der Magnetkraft des Magneten (14) umfasst.

20. Verfahren zum Einstellen der Bremskraft einer Wursthüllenbremse, mit folgenden Schritten:
Positionieren einer Wursthüllenbremse an einem freien Ende (7a) eines Füllrohrs (7) über das eine aufgezogene Wursthülle (8) mit pastöser Masse befüllt wird,
wobei die Wursthüllenbremse einen Bremsring (1) umfasst, der um das Füllrohr (7) angeordnet ist und der durch ein Verspannmittel (2, 3, 14) verspannbar ist, und die Wursthülle auf das Füllrohr (7) drückt,
Befüllen der Wursthülle mit pastöser Masse,
Einstellen der Verspannung des Bremsrings (1) während der Produktion durch Betätigung einer Einstelleinrichtung (5, 12, 16), die während der Produktion eine veränderbare Kraft auf das Verspannmittel (2, 3, 14) ausübt und diese hält, wobei die Einstelleinrichtung (5, 12, 16) eine Halteeinrichtung (5) umfasst, die nicht angetrieben wird und die gefüllte Wurst durch die Halteeinrichtung (5) durchgeführt und gegen Verdrehen gehalten wird.

21. Verfahren nach Anspruch 20,
**dadurch gekennzeichnet, dass**
während der Produktion zumindest zeitweise zum Abdrehen der gefüllten Wursthülle die Verspannmittel (2,3) zusammen mit dem Bremsring um die Längsachse (L) des Füllrohrs angetrieben werden, und die Einstelleinrichtung nicht angetrieben wird.

22. Verfahren nach Anspruch 20 oder 21,
**dadurch gekennzeichnet, dass**
die Einstelleinrichtung (5, 12, 16) in dem Zustand gehalten wird, der einer bestimmten Bremskraft entspricht.

23. Verfahren nach Anspruch 22,
**dadurch gekennzeichnet, dass**
für unterschiedliche Wurstkaliber unterschiedliche mit einer entsprechenden voreingestellten Bremskraft eingestellte Wursthüllenbremsen verwendet werden.

## Claims

1. Sausage casing brake for holding a sausage casing (8) at a free end (7a) of a stuffing pipe (7), via which the sausage casing (8) is stuffed with a pasty material, comprising: a brake ring (1), which is to be arranged around the stuffing pipe (7) and can be strained so as to press the sausage casing (8) onto the stuffing pipe (7), a straining means (2, 3, 14) for straining the brake ring (1), an adjusting device (5, 12, 16), which exerts and maintains a variable force on the straining means (2, 3, 14) to strain the brake ring during production, in such a way that the straining of the brake ring (1) and thus the brake power can be adjusted during production, **characterised in that** the adjustment means (5, 12, 16) comprises a non-driven holding means (5) which leads the stuffed sausage through and secures it against twisting.

2. Sausage casing brake according to claim 1, **characterised in that** the straining means (2, 3, 14) comprises a first (3) and a second (2) shell between which the brake ring (1) is disposed, at least the first shell (3) being freely displaceable towards the other shell (2) in an axial direction, the adjusting device (5, 12) displacing the at least one shell (3) so as to change the axial straining of the brake ring (1).

3. Sausage casing brake according to claim 2, **characterised in that** the sausage casing brake comprises at least one bearing (11), such that the first and second shell (2, 3) are rotatably mounted and can be driven about the longitudinal axis (L) of the stuffing pipe (7).

4. Sausage casing brake according to at least one of claims 2 and 3, **characterised in that** at least a part (5b) of the holding device (5), which is arranged opposite the free end (7a) of the stuffing pipe (7), is substantially axially adjustable and presses against the first shell (3).

5. Sausage casing brake according to claim 4, **characterised in that** a sliding ring (6) is mounted between the holding device (5) and the shell (3) and transfers the force to the first shell (3).

6. Sausage casing brake according to at least one of claims 2 to 5, **characterised in that** the two shells (2, 3) are configured as preassembled units in such a way that they can be displaced axially relative to each other and comprise a shell connection formed such that the shells (2, 3) do not fall apart.

7. Sausage casing brake according to at least one of claims 2 to 6, **characterised in that** the first and second shell (2, 3) are interconnected by a shell connection, and the second shell is fixed to a receptacle (4) which is mounted by at least one bearing (11) so as to be rotatable about the longitudinal axis (L) of the stuffing pipe.

8. Sausage casing brake according to at least one of claims 2 to 7, **characterised in that** the adjusting device (5, 12, 16) comprises a magnet (12) and the first shell (3) is formed so as to be magnetic at least in part, in such a way that the shell (3) can be axially displaced by the magnetic force.

9. Sausage casing brake according to claim 8, **characterised in that** the magnet (12) is axially displaceable.

10. Sausage casing brake according to claim 9, **characterised in that** the holding device (5) comprises the magnet (5).

11. Sausage casing brake according to claim 8, **characterised in that** the adjusting device (5, 12, 15) comprises means such that the magnetic force is adjustable.

12. Sausage casing brake according to at least one of claims 1 to 7, **characterised in that** the adjusting device (5, 12, 16) comprises a sealed space (16), in which a fluid is enclosed and which comprises two portions (19a, b), one (19b) of which can move in an axial direction when the pressure in the sealed space (16) changes and transfers an axial force to the first shell (3), as well as a means for changing the pressure in the space (16).

13. Sausage casing brake according to claim 12, **characterised in that** the portion (19b) which moves in an axial direction is formed in one piece with the first shell (3).

14. Sausage casing brake according to either claim 12 or claim 13, **characterised in that** the pressure can be changed by varying the volume of the sealed space (16) or by varying the filling amount of the fluid through a corresponding duct.

15. Sausage casing brake according to claim 2, **characterised in that** the adjusting device is formed in such a way that the first shell (3) can be moved in an axial direction by means of the jet of a fluid.

16. Sausage casing brake according to claim 2, **characterised in that** the two shells are mounted separately in corresponding bearings, at least one of the bearings being axially displaceable and the adjusting device axially displacing the displaceable bearing together with the shell.

17. Sausage casing brake according to claim 1, **characterised in that** the straining means comprises a shell (2), which supports the brake ring (1), and a magnet (14), which supports the brake ring (1) with the magnetic force thereof, and the brake ring (1) is formed so as to be magnetic at least in part, in such a way that the brake ring (1) can be strained by the magnetic force of the magnet (14).

18. Sausage casing brake according to claim 17, **characterised in that** the adjusting device (5, 12, 16) is formed in such a way that the magnet (14) is disposed so as to be axially movable.

19. Sausage casing brake according to claim 17, **characterised in that** the adjusting device (5, 12, 16) comprises means for changing the magnetic force of the magnet (14).

20. Method for adjusting the brake power of a sausage casing brake, comprising the following steps: positioning a sausage casing brake at a free end (7a) of a stuffing pipe (7), via which a mounted sausage casing (8) is stuffed with pasty material, the sausage casing brake comprising a brake ring (1) which is arranged around the stuffing pipe (7), can be strained by a straining means (2, 3, 14) and presses the sausage casing onto the stuffing pipe (7), stuffing the sausage casing with pasty material, and adjusting the strain of the brake ring (1) during production by actuating an adjusting device (5, 12, 16) which exerts and maintains a variable force on the straining means (2, 3, 14) during production, the adjustment means (5, 12, 16) comprising a non-driven holding means (5) and the holding means (5) leading the stuffed sausage through and securing it against twisting.

21. Method according to claim 20, **characterised in that** during production the straining means (2, 3) together with the brake ring are driven at least temporarily about the longitudinal axis (L) of the stuffing pipe so as to twist off the stuffed sausage casing, and the adjusting device is not driven.

22. Method according to either claim 20 or claim 21, **characterised in that** the adjusting device (5, 12, 16) is maintained in the state corresponding to a specific brake power.

23. Method according to claim 22, **characterised in that** different sausage casing brakes adjusted to a corresponding preset brake power are used for different sausage calibres.

## Revendications

1. Frein pour boyau de saucisse destiné à maintenir un boyau de saucisse (8) sur une extrémité libre (7a) d'un tube de remplissage (7), par l'intermédiaire duquel le boyau de saucisse (8) est rempli de masse pâteuse, comprenant :
une bague de freinage (1), qui est disposée autour du tube de remplissage (7) et peut être serrée de telle sorte qu'elle presse le boyau de saucisse (8) sur le tube de remplissage (7),
un moyen de serrage (2, 3, 14) destiné à serrer la bague de freinage (1),
un dispositif de réglage (5, 12, 16) qui exerce et maintient, pour le serrage de la bague de freinage pendant la production, une force modifiable sur le moyen de serrage (2, 3, 14) de telle sorte que le serrage de la bague de freinage (1), et ainsi la force de freinage, sont réglables pendant la production,
**caractérisé en ce que**
le dispositif de réglage (5, 12, 16) comprend un dispositif de retenue (5) non entraîné, au travers duquel est guidée la saucisse remplie et est maintenue contre la rotation.

2. Frein pour boyau de saucisse suivant la revendication 1, **caractérisé en ce que** le moyen de serrage (2, 3, 14) comprend une première coque (3) et une seconde coque (2), entre lesquelles est disposée la bague de freinage (1), au moins la première coque (3) étant librement mobile dans la direction axiale par rapport à l'autre coque (2), le dispositif de réglage (5, 12) déplaçant la au moins une coque (3) de sorte que le serrage axial de la bague de freinage (1) se modifie.

3. Frein pour boyau de saucisse suivant la revendication 2, **caractérisé en ce que** le frein pour boyau de saucisse comprend au moins un palier (11), de sorte que la première et la seconde coques (2, 3) sont montées tournantes et entraînables autour de l'axe longitudinal (L) du tube de remplissage (7).

4. Frein pour boyau de saucisse suivant l'une au moins des revendications 2 et 3, **caractérisé en ce qu'**au moins une partie (5b) du dispositif de retenue (5), qui est disposé en vis-à-vis de l'extrémité libre (7a) du tube de remplissage (7), est ajustable essentiellement dans la direction axiale et presse contre la première coque (3).

5. Frein pour boyau de saucisse suivant la revendication 4, **caractérisé en ce qu'**une bague de glissement (6), qui transmet la force à la première coque (3), est disposée entre le dispositif de retenue (5) et la coque (3).

6. Frein pour boyau de saucisse suivant l'une au moins des revendications 2 à 5, **caractérisé en ce que** les deux coques (2, 3) sont réalisées sous forme de composants préassemblés, de telle sorte qu'elles peuvent se déplacer mutuellement dans la direction axiale et présentent un assemblage de coques qui est réalisé de sorte que les coques (2, 3) ne peuvent pas se dissocier.

7. Frein pour boyau de saucisse suivant l'une au moins des revendications 2 à 6, **caractérisé en ce que** la première et la seconde coques (2, 3) sont assemblées entre elles par l'intermédiaire d'un assemblage et la seconde coque est fixée sur un logement (4), monté tournant autour de l'axe longitudinal (L) du tube de remplissage par l'intermédiaire d'au moins un palier (11).

8. Frein pour boyau de saucisse suivant l'une au moins des revendications 2 à 7, **caractérisé en ce que** le dispositif de réglage (5, 12, 16) comprend un aimant (12) et la première coque (3) a une réalisation au moins en partie magnétique, de telle sorte que la coque (3) est mobile dans la direction axiale par l'intermédiaire de la force magnétique.

9. Frein pour boyau de saucisse suivant la revendication 8, **caractérisé en ce que** l'aimant (12) est mobile dans la direction axiale.

10. Frein pour boyau de saucisse suivant la revendication 9, **caractérisé en ce que** le dispositif de retenue (5) comprend l'aimant (12).

11. Frein pour boyau de saucisse suivant la revendication 8, **caractérisé en ce que** le dispositif de réglage (5, 12, 16) comprend des moyens, de sorte que la force magnétique est ajustable.

12. Frein pour boyau de saucisse suivant l'une au moins des revendications 1 à 7, **caractérisé en ce que** le dispositif de réglage (5, 12, 16) comprend un espace étanche (16), dans lequel est inclus un fluide et qui comporte deux sections (19a, b), dont l'une (19b) est mobile dans la direction axiale sous l'effet d'une variation de pression dans l'espace étanche (16) et transmet une force axiale à la première coque (3), ainsi qu'un moyen pour modifier la pression dans l'espace (16).

13. Frein pour boyau de saucisse suivant la revendication 12, **caractérisé en ce que** la section (19b), qui se déplace dans la direction axiale, a une réalisation monobloc avec la première coque (3).

14. Frein pour boyau de saucisse suivant l'une des revendications 12 et 13, **caractérisé en ce que** la pression est modifiable par variation du volume de l'espace étanche (16), ou par modification de la quantité de remplissage du fluide au travers d'une conduite appropriée.

15. Frein pour boyau de saucisse suivant la revendication 2, **caractérisé en ce que** le dispositif de réglage est réalisé de telle sorte que la première coque (3) est déplaçable dans la direction axiale par le jet d'un fluide.

16. Frein pour boyau de saucisse suivant la revendication 2, **caractérisé en ce que** les deux coques sont montées séparément dans des paliers correspondants, au moins l'un des paliers étant mobile dans la direction axiale, et le dispositif de réglage déplace le palier mobile, avec la coque, dans la direction axiale.

17. Frein pour boyau de saucisse suivant la revendication 1, **caractérisé en ce que** le moyen de serrage comprend une coque (2), qui supporte la bague de freinage (1), et un aimant (14), qui supporte la bague de freinage (1) par sa force magnétique, et la bague de freinage (1) a une réalisation au moins en partie magnétique, de telle sorte que la bague de freinage (1) peut être serrée par l'intermédiaire de la force magnétique de l'aimant (14).

18. Frein pour boyau de saucisse suivant la revendication 17, **caractérisé en ce que** le dispositif de réglage (5, 12, 16) a une réalisation telle que l'aimant (14) a une disposition mobile dans la direction axiale.

19. Frein pour boyau de saucisse suivant la revendication 17, **caractérisé en ce que** le dispositif de réglage (5, 12, 16) comprend des moyens pour modifier la force magnétique de l'aimant (14).

20. Procédé de réglage de la force de freinage d'un frein pour boyau de saucisse, comprenant les étapes suivantes :
- Positionnement d'un frein pour boyau de saucisse sur une extrémité libre (7a) d'un tube de remplissage (7), par l'intermédiaire duquel un boyau de saucisse tendu (8) est rempli de masse pâteuse,
le frein pour boyau de saucisse comprenant une bague de freinage (1), qui est disposée autour du tube de remplissage (7), peut être serrée par un moyen de serrage (2, 3, 14), et qui presse le boyau de saucisse sur le tube de remplissage (7),
- Remplissage du boyau de saucisse par de la masse pâteuse,
- Réglage du serrage de la bague de freinage (1) pendant la production par actionnement d'un dispositif de réglage (5, 12, 16), qui exerce et maintient pendant la production une force modifiable sur le moyen de serrage (2, 3, 14), le dispositif de réglage (5, 12, 16) comprenant un dispositif de retenue (5), qui n'est pas entraîné et la saucisse remplie étant guidée au travers du dispositif de retenue (5) et maintenue contre la rotation.

21. Procédé suivant la revendication 20, **caractérisé en ce que**, pendant la production, les moyens de serrage (2, 3), avec la bague de freinage, sont entraînés autour de l'axe longitudinal (L) du tube de remplissage, au moins par intermittence, pour la séparation par torsion du boyau de saucisse rempli, et le dispositif de réglage n'est pas entraîné.

22. Procédé suivant l'une des revendications 20 et 21, **caractérisé en ce que** le dispositif de réglage (5, 12, 16) est maintenu dans l'état qui correspond à une force de freinage définie.

23. Procédé suivant la revendication 22, **caractérisé en ce que** différents freins pour boyaux de saucisses, réglés avec une force de freinage préréglée appropriée, sont utilisés pour des calibres de saucisses différents.
